# DEMANDE DE BREVET EUROPEEN

(11) **EP 4 692 029 A1**
(43) Date de publication de la demande: **11.02.2026**
(21) Numéro de dépôt: 25191443.8
(22) Date de dépôt: 24.07.2025
(51) Int. Cl.: C05F 11/00, A01G 24/35, C05G 3/80, C05G 5/40

(54) **HYDROGEL, EN PARTICULIER HYDROGEL D'AGAR, CONTENANT UN EXTRAIT D'AU MOINS UNE ALGUE ROUGE AGAROPHYTE, SON PROCEDE DE PREPARATION ET SON UTILISATION COMME ENGRAIS HYDRORETENTEUR**

(30) Priorité: 07.08.2024 FR 2408747
(71) Demandeur: STE D'ETUDES ET D'EXPLOITATION D'ALGUES ET PRODUITS MARITIME, 14000 Kenitra (MA)
(72) Inventeur: LEBBAR, Rachid, 14000 KENITRA (MA); LEBBAR, Salim, 14000 KENITRA (MA)
(74) Mandataire: Cabinet Chaillot

(57) **Abrégé**

Hydrogel qui est à base d'au moins un gélifiant, en particulier à base d'agar, et qui renferme un produit d'extraction par une solution aqueuse alcaline d'au moins une algue rouge agarophyte de la famille des Gelidiaceae. L'hydrogel se présente avantageusement sous la forme de morceaux ou blocs, tels que billes ou cubes.

## Description

La présente invention concerne un gel aqueux contenant un extrait d'au moins une algue rouge agarophyte, son procédé de préparation et son utilisation comme engrais hydrorétenteur.

Le stress hydrique est devenu une problématique majeure et commune, accentuée par les prévisions climatiques constantes qui envisagent un stress hydrique à venir plus intense. Afin de diminuer les effets et conséquences du stress hydrique, les cultures ont besoin d'eau et d'arrosages répétés. Cependant, il est observé à chaque arrosage une perte d'eau, soit par évaporation, soit par infiltration de l'eau dans la nappe phréatique.

L'eau qui n'est plus accessible ne sera pas assimilée par les plants cultivés car elle est perdue. Il est estimé, lors des arrosages, au moins 40% de perte d'eau. Cette perte est accentuée dans les zones arides et lors de la saison d'été.

Il existe sur le marché des gels capables de capter l'eau à disposition des racines. On peut cependant souligner que ces hydrogels connus ne sont généralement pas autorisés pour l'agriculture alimentaire. En effet, les polymères hydrorétenteurs de synthèse possèdent souvent des monomères cancérigènes.

La présente invention vise à proposer un produit conforme pour l'agriculture à but alimentaire et biologique, à appliquer au pied des plantes, permettant de limiter les arrosages de celles-ci tout en renforçant leur résistance au stress hydrique, ce qui peut également limiter leur besoin en eau d'arrosage.

A cet effet, les présents inventeurs sont parvenus à mettre au point une formulation d'engrais hydrorétenteur sous forme de gel capable de capter l'eau lors de sa préparation et lors des arrosages des plantes au pied desquelles il est appliqué, ce gel contenant de l'eau, au moins un gélifiant et un engrais liquide issu d'une algue rouge agarophyte. L'intérêt réside dans l'accessibilité pour la plante cultivée d'une part à l'eau et d'autre part à l'engrais liquide qui renforce ainsi sa résistance au stress hydrique. Le nombre d'arrosages pour une culture peut ainsi être grandement diminué comme montré ci-après, la consommation en eau étant alors très limitée.

Par ailleurs, de façon très avantageuse, par le choix judicieux du ou des gélifiants, le produit ne présente aucun effet néfaste pour l'agriculture car constitué majoritairement de matières organiques. Lorsque ces matières organiques se dégradent, elles n'ont pas de conséquences négatives. Ce produit est alors applicable sans danger en agronomie et surtout en agronomie alimentaire.

La présente invention a donc d'abord pour objet un hydrogel qui est à base d'au moins un gélifiant et qui renferme, comme fertilisant, un produit d'extraction par une solution aqueuse alcaline d'au moins une algue rouge agarophyte de la famille des Gelidiaceae.

En particulier, la ou les algues rouges agarophytes de la famille des Gelidiaceae peuvent être choisies parmi *Gelidiella acerosa, Gelidium amansii, Gelidium cartilagineum, Gelidium liatulum, Gelidium pacificum, Gelidium lingulatam, Gelidium sesquipedale, Gelidium corneum et Gelidium pristoides.*

Conformément à un mode de réalisation particulier, le produit d'extraction fertilisant est la phase aqueuse obtenue par extraction de ladite ou desdites algues rouges par une solution aqueuse alcaline en faisant suivre par une filtration pour récupérer ladite phase aqueuse, laquelle peut ensuite avoir été concentrée, déshydratée ou lyophilisée, puis remise en solution dans de l'eau.

L'extraction a en particulier été conduite à chaud, entre 40 et 98°C, de préférence entre 60 et 80°C, pendant 30 minutes - 8 heures, ladite algue rouge ayant été employée à raison de 600-900kg dans 10-20m³ de solution aqueuse alcaline.

Pour l'extraction, on a utilisé en particulier une solution aqueuse alcaline à 0,1 - 20 % en poids, de préférence 1 à 5 % en poids, d'hydroxyde de sodium ou d'hydroxyde de potassium.

La phase aqueuse alcaline obtenue après filtration peut avoir été neutralisée par un acide, en particulier l'acide nitrique, l'acide sulfurique ou l'acide phosphorique.

Le ou les gélifiants peut ou peuvent avantageusement être choisis parmi :
- les agars, en particulier l'agar issu d'une algue rouge agarophyte telle qu'une algue de la famille des Gelidiaceae et de la famille des Gracilariaceae ;
- la gélatine ;
- les alginates, tels que l'alginate de sodium, en présence d'ions trivalents ou bivalents, tels que l'ion calcium ;
- les carraghénanes, en particulier issus d'une algue rouge carraghénophyte, tels que le carraghénane kappa, en présence d'ions calcium ou potassium ;
- les pectines, notamment issues des peaux des fruits, en présence d'ions calcium ou baryum.

Les algues de la famille des Gelidiaceae dont est issu l'agar peuvent être celles déjà indiquées ci-dessus , et celles de la famille des Gracilariaceae peuvent par exemple être choisies parmi *Gracilaria verrucosa* et *Gracilaria gracilis.*

L'hydrogel selon la présente invention peut notamment comporter 0,05 à 100 g, en particulier de 0,1 à 20 g, d'au moins un agent gélifiant pour 0,1 à 500 g, de préférence de 1 à 100 g, d'extrait sec du produit d'extraction fertilisant et pour 1000 mL d'eau.

L'hydrogel selon l'invention peut se présenter sous la forme de morceaux ou blocs, tels que billes ou cubes, ou encore sous la forme d'une gelée ou d'une masse visqueuse capable de s'écouler. La forme de morceaux ou blocs, tels que billes ou cubes, s'avère être particulièrement intéressante pour le transport et pour une libération de l'eau contenue de façon maîtrisée et régulière au cours du temps.

La présente invention a également pour objet un procédé de fabrication de l'hydrogel tel que défini ci-dessus, caractérisé par le fait que l'on mélange le produit d'extraction tel que défini ci-dessus avec le ou les gélifiants en milieu aqueux, on chauffe le mélange à une température supérieure à la température de solubilisation du ou des gélifiants et on l'amène à se solidifier ou à former une gelée ou une masse visqueuse capable de s'écouler lors de son refroidissement, l'eau provenant du produit d'extraction au moins en partie.

On peut couler le mélange chauffé soit dans un moule pour obtenir, par refroidissement, une masse moulée solide que l'on peut découper en morceaux ou blocs, tels que boules ou cubes, soit dans des moules pour obtenir directement les morceaux ou blocs, tels que boules ou cubes.

Conformément à un mode de réalisation particulier, le gélifiant utilisé est de l'agar en poudre, le mélange est chauffé entre 50 et 120°C, de préférence entre 80 et 120°C, pendant 10 à 20 min, pour solubiliser l'agar, le mélange obtenu gélifiant par refroidissement du mélange ainsi chauffé.

La gélification a alors lieu par le biais de liaisons hydrogène à 34-38°C dans les cas d'un agar issu d'une algue de la famille des Gelidiaceae et à 40-53°C dans le cas d'un agar issu d'une algue de la famille des Gracilariaceae. L'agar, une fois stabilisé et sous forme de bloc solide, ne perdra sa consistance qu'à partir de 80°C.

La présente invention a aussi pour objet l'utilisation en agriculture de l'hydrogel tel que défini ci-dessus ou préparé par le procédé tel que défini ci-dessus, comme agent capable de retenir l'eau à disposition des racines d'une plante, tout en procurant un effet fertilisant.

La présente invention a enfin pour objet un procédé d'apport d'un engrais aux plantes cultivées dans des conditions de rétention de l'eau d'arrosage de celles-ci pour réduire, voire empêcher, la perte d'eau par évaporation ou infiltration de l'eau dans la nappe phréatique, caractérisé par le fait que l'on dispose l'hydrogel tel que défini ci-dessus ou préparé par le procédé tel que défini ci-dessus sur le sol autour des plantes ou dans le sol autour des racines des plantes.

Les plantes sont notamment choisies parmi les plantes maraîchères, telles que la tomate, le melon, les salades comme les laitues, les épinards, les haricots, les arbres fruitiers, tels que les bananiers, les avocatiers, les poiriers, les pommiers, les nectariniers, les plantes ornementales, les plantes horticoles, telles que les rosiers, les plantes prairiales, les plantes de grande culture.

On applique avantageusement l'hydrogel selon la présente invention à raison de 1 à 5 répétitions pendant toute la durée de la récolte, notamment 1 g - 10 kg d'hydrogel/plant, plus particulièrement 10 g - 500 g d'hydrogel/plant.

Les exemples suivants illustrent la présente invention sans toutefois en limiter la portée.

### Exemple 1 : Préparation d'un extrait fertilisant par traitement alcalin de Gelidium sesquipedale

On a placé 800 kg de l'algue rouge *Gelidium sesquipedale* dans 20 m³ d'eau.

On a conduit un traitement alcalin en y ajoutant du NaOH pour une concentration à 3% en masse à température ambiante et en agitant pendant 2 heures.

Ensuite on a filtré sur filtre de 0,1 micron pour récupérer la partie liquide dans une quantité de 19 m³.

Ce produit liquide présente un pH basique.

Il a été neutralisé à pH 7 par de l'acide nitrique.

### Exemples 2 à 10 : Préparation de boules de gel hydrorétenteur fertilisant

On a préparé les mélanges suivants :

| Exemple | Volume de l'extrait aqueux neutralisé de l'Ex.1, à 10% en volume poids dans l'eau (mL) | Gélifiant Quantité ajoutée (g) |
|---|---|---|
| 2 | 500 | Agar 10 |
| 3 | 500 | Agar 20 |
| 4 | 250 | Agar 10 |
| 5 | 250 | Agar 20 |
| 6 | 125 | Agar 4 |
| 7 | 500 | Gélatine 80 |
| 8 | 500 | Carraghénane kappa 10 |
| 9 | 500 | Pectine* 30 |
| 10 | 50 | Alginate de sodium* 10 |

| | | |
|---|---|---|
| * le mélange a été versé dans un bain de chlorure de calcium de 2L à 20g de chlorure de calcium | | |

Chaque mélange a été chauffé pendant 15 min à ébullition (autour de 98°C), puis versé dans un moule. Lorsque la température est descendue au-dessous de 35°C, le mélange a gélifié, la formule est laissée reposer 3 heures.

On a obtenu des boules d'hydrogel que l'on a soumises aux tests décrits dans les Exemples 7 et 8 suivants.

### Exemple 11

Dans des pots chacun d'une capacité de 1 kg, nous avons planté des laitues à raison de 1 plant par pot, avec 8 pots par modalité.

40 g par pot des boules d'hydrogel des Ex 2 à 6 ont été placés dans les pots en étant disposées sur la terre : 8 pots étant donc utilisés dans le cas d'un exemple.

40 g / pot des boules d'hydrogel des Ex 2 à 6 ont été placés dans les pots en étant enfouies à 1cm de profondeur près des racines, 8 pots étant utilisés dans le cas d'un exemple.

8 pots témoins pour les exemples respectivement 2 et 3, 4 et 5, et 6 ont été prévus, lesquels n'ont pas reçu de boules d'hydrogel.

On a arrosé les pots témoins avec 50 ml d'eau par pot chaque jour pendant 40 jours.

On a arrosé tous les autres pots également avec 50 ml d'eau par pot mais 1 jour sur 2 pendant ces mêmes 40 jours.

Les masses en grammes des feuilles de laitues cultivées pendant ces 40 jours sont rapportées dans le Tableau 1 suivant :

**Tableau 1**

| Exemple | Témoin - Masse t | Hydrogel en surface - Masse ex (% augmentation du rendement) | Hydrogel enfoui - Masse ex (% augmentation du rendement) |
|---|---|---|---|
| 2 | 4,90 | 8,28 (69 %) | 9,23 (88,36 %) |
| 3 | 4,90 | 9,96 (103 %) | 10,04 (105 %) |
| 4 | 4,39 | 8,23 (87,47 %) | 7,13 (62,41 %) |
| 5 | 4,39 | 7,98 (81,77 %) | 7,80 (77,67 %) |
| 6 | 4,74 | 6,77 (42,83 %) | 5,57 (17,5 %) |

Le pourcentage d'augmentation du rendement est défini comme étant le rapport (Masse ex - Masse t)/Masse t * 100

On observe pour chacun des Exemples 2 à 6 une augmentation du rendement malgré une réduction de l'arrosage de 50 %.

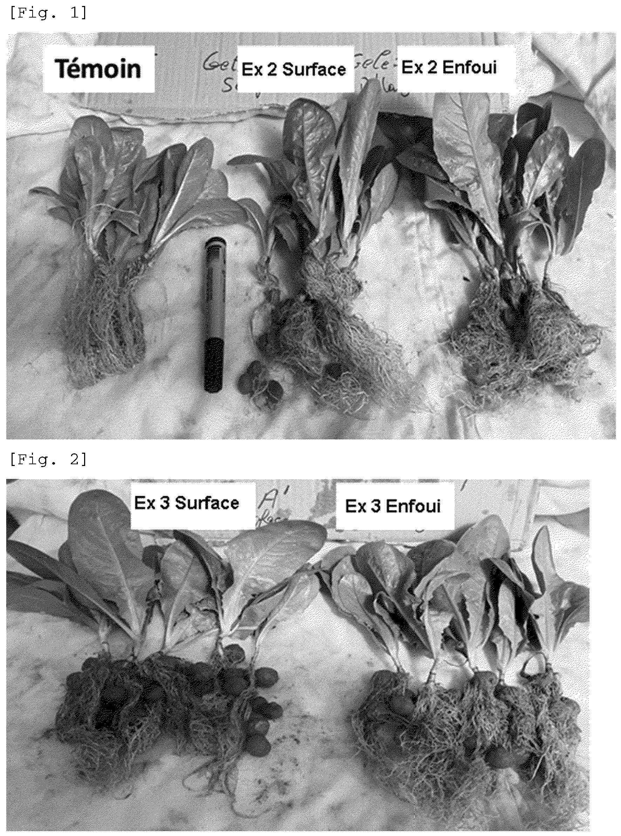

[Fig. 1] montre des plants de laitue du témoin et de l'Exemple 2 avec leurs racines, arrachés du sol après le traitement.
[Fig. 2] montre des plants de laitue du témoin et de l'Exemple 3 avec leurs racines, arrachés du sol après le traitement.
[Fig. 3] représente la perte en eau en grammes des boules des Exemples 2 et 3 enfouies après arrosage puis repos.
[Fig. 4] représente la perte en eau en grammes des boules de l'Exemple 4 après arrosage puis repos.
[Fig. 5] représente le poids moyen en grammes des boules de l'Exemple 6 enfouies après arrosage puis repos.

Il est possible d'observer sur ces Figures que les boules d'hydrogel en surface comme celles enfouies des Exemples 2 et 3 sont traversées par les racines des laitues, les boules d'hydrogel enfouies sont traversées davantage par les racines. Le produit d'extraction fertilisant et l'eau sont plus accessibles aux plants dans le cas enfoui comme dans le cas en surface.

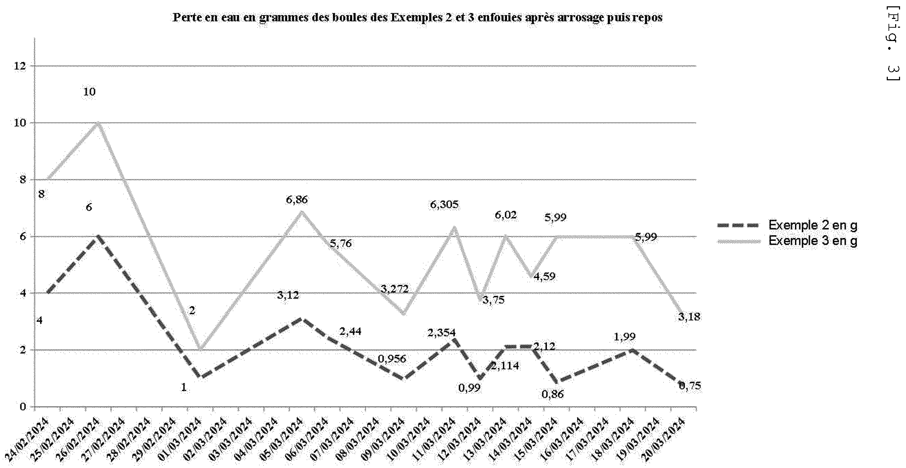

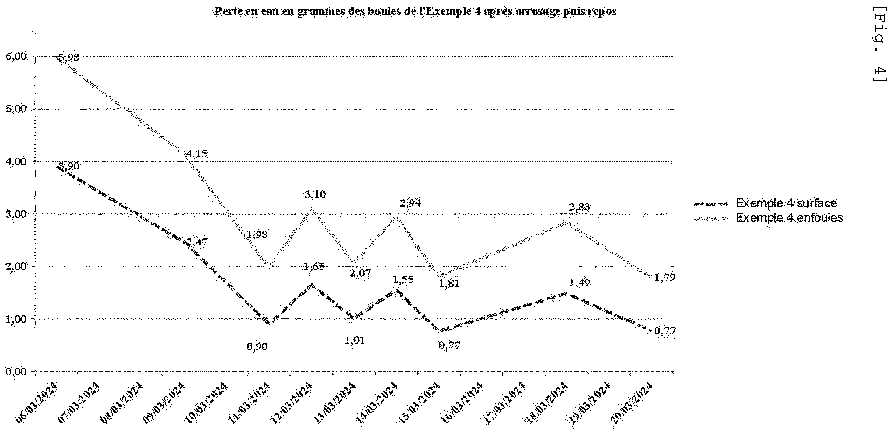

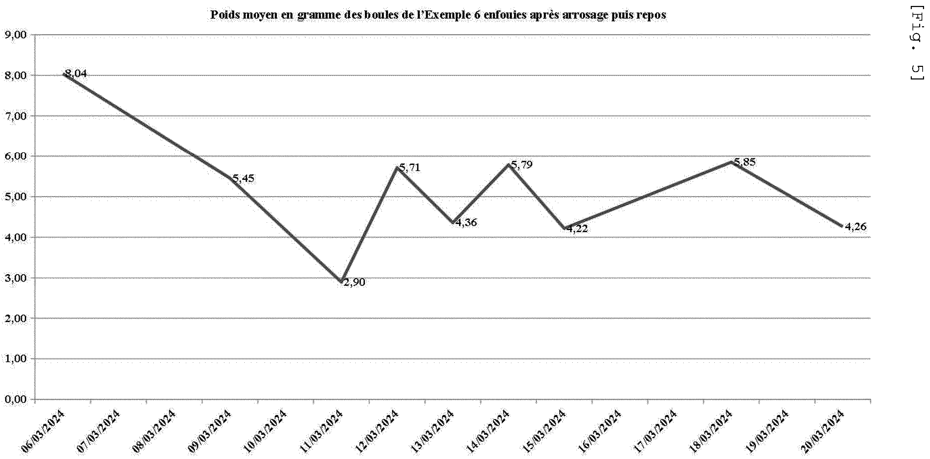

Un suivi en parallèle de la masse des boules de gel a été effectué lors des arrosages sur des boules d'hydrogel qui sont arrosées puis que l'on a laissé reposer. On a procédé de la façon suivante : les boules sont mises sur un filtre, l'eau qui s'échappe par synérèse est filtrée, récupérée dans un bécher gradué et mesurée ; en parallèle, la masse des boules est mesurée. Les résultats figurent aux Figures 3, 4 et 5.

Il est observé un gain de poids lors des arrosages, montrant que les boules absorbent une partie de l'eau d'arrosage pour ensuite la libérer progressivement. Il est possible de capter et d'économiser l'eau de plusieurs arrosages et de garder cette eau à disposition des plantes sur une durée étendue.

### Exemple 12

On a procédé comme à l'Exemple 11 excepté que l'on a utilisé les boules d'hydrogel selon les Exemples 2 et 3 avec application de 8g de boules au lieu de 40g de boules. Le témoin a été arrosé chaque jour pendant 21 jours et les autres pots une fois seulement pendant ces 21 jours.

Les résultats sont rapportés dans le Tableau 2 suivant :

**Tableau 2**

| Exemple | Témoin - Masse t | Masse ex (% augmentation du rendement) |
|---|---|---|
| 2 | 11,13 | 21,39 (92 %) |
| 3 | 11,13 | 21,58 (93,89 %) |

Il est observé une augmentation des rendements comparables à celles de l'Exemple 11 avec une quantité en boules d'hydrogel inférieure, soit 8g au lieu de 40g. Aussi, malgré un stress hydrique plus important, soit 1 seul arrosage en 21 jours, les rendements sont améliorés pour les laitues qui ont reçu les boules d'hydrogel par rapport au témoin qui a été arrosé chaque jour pendant 21 jours.

## Revendications

1. - Hydrogel qui est à base d'au moins un gélifiant et qui renferme, comme fertilisant, un produit d'extraction par une solution aqueuse alcaline d'au moins une algue rouge agarophyte de la famille des Gelidiaceae.

2. - Hydrogel selon la revendications 1, **caractérisé par le fait que** la ou les algues rouges agarophytes de la famille des Gelidiaceae sont choisies parmi *Gelidiella acerosa, Gelidium amansii, Gelidium cartilagineum, Gelidium liatulum, Gelidium pacificum, Gelidium lingulatam, Gelidium sesquipedale, Gelidium corneum et Gelidium pristoides.*

3. - Hydrogel selon l'une des revendications 1 et 2, **caractérisé par le fait que** le produit d'extraction fertilisant est la phase aqueuse obtenue par extraction de ladite ou desdites algues rouges par une solution aqueuse alcaline en faisant suivre par une filtration pour récupérer ladite phase aqueuse, laquelle peut ensuite avoir été concentrée, déshydratée ou lyophilisée, puis remise en solution dans de l'eau.

4. - Hydrogel selon la revendication 3, **caractérisé par le fait que** l'extraction a été conduite à chaud, entre 40 et 98°C, de préférence entre 60 et 80°C, pendant 30 minutes - 8 heures, ladite algue rouge ayant été employée à raison de 600-900kg dans 10-20m³ de solution aqueuse alcaline.

5. - Hydrogel selon l'une des revendications 3 et 4, **caractérisé par le fait que** pour l'extraction, on a utilisé une solution aqueuse alcaline à 0,1 - 20 % en poids, de préférence, 1 à 5 % en poids, d'hydroxyde de sodium ou d'hydroxyde de potassium.

6. - Hydrogel selon l'une des revendications 3 à 5, **caractérisé par le fait que** la phase aqueuse alcaline obtenue après filtration a été neutralisée par un acide, en particulier l'acide nitrique, l'acide sulfurique ou l'acide phosphorique.

7. - Hydrogel selon l'une des revendications 1 à 6, **caractérisé par le fait que** le ou les gélifiants est ou sont choisis parmi :
- les agars, en particulier l'agar issu d'une algue rouge agarophyte telle qu'une algue de la famille des Gelidiaceae et de la famille des Gracilariaceae ;
- la gélatine ;
- les alginates, tels que l'alginate de sodium, en présence d'ions trivalents ou bivalents, tels que l'ion calcium ;
- les carraghénanes, en particulier issus d'une algue rouge carraghénophyte, tels que le carraghénane kappa, en présence d'ions calcium ou potassium ;
- les pectines, notamment issues des peaux des fruits, en présence d'ions calcium ou baryum.

8. - Hydrogel selon l'une des revendications 1 à 7, **caractérisé par le fait qu'**il comporte 0,05 à 100 g, en particulier de 0,1 à 20 g d'au moins un agent gélifiant pour 0,1 à 500 g, de préférence 1 à 100 g, d'extrait sec du produit d'extraction fertilisant et pour 1000 mL d'eau.

9. - Hydrogel selon l'une des revendications 1 à 8, **caractérisé par le fait qu'**il se présente sous une forme de morceaux ou blocs, tels que billes ou cubes, ou sous la forme d'une gelée ou d'une masse visqueuse capable de s'écouler, en particulier sous la forme de morceaux ou blocs, tels que billes ou cubes.

10. - Procédé de fabrication de l'hydrogel tel que défini à l'une des revendications 1 à 9, **caractérisé par le fait que** l'on mélange le produit d'extraction tel que défini à l'une des revendications 1 à 9 avec le ou les gélifiants en milieu aqueux, on chauffe le mélange à une température supérieure à la température de solubilisation du ou des gélifiants et on l'amène à se solidifier ou à former une gelée ou une masse visqueuse capable de s'écouler lors de son refroidissement, l'eau provenant du produit d'extraction au moins en partie.

11. - Procédé selon la revendication 10, **caractérisé par le fait que** l'on coule le mélange chauffé dans un moule pour obtenir un bloc que l'on peut découper en morceaux, ou blocs, tels que boules ou cubes, ou dans des moules pour obtenir directement les morceaux ou blocs, tels que boules ou cubes.

12. - Procédé selon l'une des revendications 10 et 11, **caractérisé par le fait que** le gélifiant utilisé est de l'agar en poudre, le mélange est chauffé entre 50 et 120°C, de préférence entre 80 et 120°C, pendant 10 à 20 min, pour solubiliser l'agar, le mélange obtenu gélifiant par refroidissement du mélange ainsi chauffé.

13. - Utilisation en agriculture de l'hydrogel tel que défini à l'une des revendications 1 à 9 ou préparé par le procédé tel que défini à l'une des revendications 10 à 12, comme agent capable de retenir l'eau à disposition des racines d'une plante, tout en procurant un effet fertilisant.

14. - Procédé d'apport d'un engrais aux plantes cultivées dans des conditions de rétention de l'eau d'arrosage de celles-ci pour réduire, voire empêcher, la perte d'eau par évaporation ou infiltration de l'eau dans la nappe phréatique, **caractérisé par le fait que** l'on dispose l'hydrogel tel que défini à l'une des revendications 1 à 9 ou préparé par le procédé tel que défini à l'une des revendications 10 et 12 sur le sol autour des plantes ou dans le sol autour des racines des plantes.

15. - Procédé selon la revendication 14, **caractérisé par le fait que** les plantes sont choisies parmi les plantes maraîchères, telles que la tomate, le melon, les salades comme les laitues, les épinards, les haricots, les arbres fruitiers, tels que les bananiers, les avocatiers, les poiriers, les pommiers, les nectariniers, les plantes ornementales, les plantes horticoles, telles que les rosiers, les plantes prairiales, les plantes de grande culture.

16. - Procédé selon l'une des revendications 14 et 15, **caractérisé par le fait qu'**on applique l'hydrogel à raison de 1 à 5 répétitions pendant la durée de la récolte, notamment 1 g -10 kg d'hydrogel/plant, plus particulièrement 10 g - 500 g d'hydrogel/plant.
